# NEUE EUROPÄISCHE PATENTSCHRIFT

(11) **EP 0 961 147 B2**
(45) Veröffentlichungstag und Bekanntmachung des Hinweises auf die Entscheidung über den Einspruch: **19.04.2006**
(45) Hinweis auf die Patenterteilung: 10.01.2001
(21) Anmeldenummer: 98109203.4
(22) Anmeldetag: 18.05.1998
(51) Int. Cl.: G02B 7/06

(54) **Binokulares Fernrohr**
Binocular telescope
Télescope binoculaire

(43) Veröffentlichungstag der Anmeldung: 01.12.1999
(73) Patentinhaber: SWAROVSKI OPTIK KG, 8067 Absam (AT)
(72) Erfinder: Miller, Benno, 6020 Innsbruck (AT); Murg, Erwin, 6063 Neu-Rum (AT); Pernstich, Ludwig, 6063 Rum (AT)
(74) Vertreter: Kador & Partner

(56) Entgegenhaltungen:
- EP-A- 0 152 056
- EP-A- 0 358 060
- DD-A- 292 330
- DE-C- 154 142
- DE-C- 3 929 825
- DE-C- 4 124 584
- US-A- 4 436 387
- T. Seeger, feldstecher-Ferngläser im Wandel der Zeit, Edition Bresser Optik (1989), Seiten 86 und 87

## Beschreibung

Die Erfindung bezieht sich auf ein binokulares Femrohr mit zwei Tuben nach dem Oberbegriff des Anspruchs 1.

Aus OE-PS 154 142 ist ein solches Fernrohr mit zwei im Abstand angeordneten Gelenkbrücken bekannt. Da diese nicht durch eine Mittelachse verbunden sind, wird zwischen den beiden Tuben und den beiden Gelenkbürcken ein Freiraum gebildet, so daß ein Tubus mit einer Hand umschlossen werden kann. Durch diesen Durchgriff wird ein sicheres Hantieren mit dem Femrohr gewährleistet, insbesondere wird das Halten und Tragen des Fernrohres mit einer Hand wesentlich erleichtert.

Bei dem bekannten Femrohr werden die Fokussiermittel durch die Okulare gebildet, die in den Tuben teleskopartig verschiebbaren Rohreinsätzen vorgesehen sind. Diese Rohreinsätze weisen eine Außenverzahnung und zur Verschiebung in Tubuslängsrichtung ein Innengewinde auf. In die Außenverzahnung greifen an der Gelenkbrücke gelagerte Zwischenzahnräder ein, die an dem einen bzw. anderen von zwei konzentrisch und hintereinander angeordneten Drehknöplen sitzen.

Wenn bei dem bekannten Femrohr die Tuben um die Gelenkachse verschwenkt werden, ändert sich zwangsläufig die Fokussierung. Das bekannte Fernrohr ist daher äußerst schwierig zu handhaben. Zudem muß die Fokussierung durch gleichzeitige Drehung der beiden dicht hintereinander angeordneten Drehknöpfe erfolgen, was ebenfalls mit Schwierigkeiten verbunden ist.

Ferner sind binokulare Femrohre mit einer hohlen Doppelgelenkbrücke bekannt, in der ein Mitteltrieb gelagert ist, mit dem über ein Getriebe die Fokussiermittel betätigbar sind, wobei letztere in Hülsen innerhalb der Tuben gelagert sind, also eine sogenannte Innenfokussierung vorliegt (vgl. z.B. DE 39 29 825 C1). Das bekannte Femrohr besitzt durch die voluminöse Gelenkbrücke nicht nur keine Durchgriffsmöglichkeiten, vielmehr weist es durch die breite hohle Gelenkbrücke und das diese im wesentlichen ausfüllende schwere Getriebe auch ein hohes Gewicht auf.

Aus US 4,436,387 A ist ein binokulares Femrohr bekannt,das eine Fokussiereinrichtung und eine Zoomeinrichtung aufweist. Zur Verschiebung der Linsengruppen der Zoomeinrichtung in den beiden Tuben ist ein mit seinem einen Ende an den Linsengruppen angreifender zweiarmiger Hebel vorgesehen, der um eine senkrecht zur Fernrohrlängsachse verlaufende Achse verschwenkbar ist, wobei das andere Ende jedes Hebels an einem achsparallel verschiebbaren Bolzen mit einem Stift in einer Nut angelenkt ist.

Aufgabe der Erfindung ist es, ein platzsparendes Getriebe zur Betätigung der Fokussiermittel zur Verfügung zu stellen, da es eine Fokussierung unabhängig von der Änderung der Winkelstellung der Gelenkbrücken ermöglicht.

Dies wird erfindungsgemäß durch das in Anspruch 1 gekennzeichnete binokulare Femrohr erreicht. Um die Handhabung zu erleichtern, weist das erfindungsgemäße Femrohr zwei im Abstand voneinander angeordnete Gelenkbrücken auf, ohne daß dazwischen eine Mittelachse vorgesehen ist. Zudem ist das Getriebe, durch das die in Tubuslängsrichtung verschiebbare Fokussiermittel betätigt werden, so ausgebildet, daß die Fokussierung unabhängig von der Einstellung des Augenabstandes erfolgt, also unabhängig von der Änderung der Winkelstellung der Gelenkbrücken. Außerdem wird die Handhabung des erfindungsgemäßen Femrohres dadurch erleichtert, daß beide Fokussierungsmittel durch einen gemeinsamen Drehknopf betätigbar sind.

Damit eine Fokussierung über eine Gelenkbrücke erfolgen kann, die so schmal ist, daß sie in einem solchen Abstand ohne Mittelachse von der anderen Gelenkbrücke angeordnet werden kann, daß ein Durchgriff entsteht, muß ein äußerst platzsparendes Getriebe zur Betätigung der Fokussiermittel vorgesehen sein. Dieses Getriebe weist je einen an den beiden Fokussiermitteln angreifenden, zweiarmigen, winkelförmigen Hebel auf, der um eine senkrecht zur Fernrohrlängsrichtung verlaufende Achse verschwenkbar ist und mit einem Ende an dem jeweiligen Fokussiermittel angelenkt ist. Das von dem Fokussiermittel abgewandte Ende des Winkelhebels greift dabei an einem durch Drehung des Drehknopfes axial verschiebbaren Anschlag an, der als Konusfläche ausgebildet ist.

Zur Axialverschiebung dieses Anschlages oder Widerlagers und damit der Betätigung der Winkelhebung zur Verschiebung der Fokussiermittel in den Tuben kann ein Schraubengewinde vorgesehen sein.

Zur Dioptrieeinstellung kann einer der beiden Hebel mit einem weiteren Getriebe verschiebbar ausgebildet sein. Dieses Getriebe kann beispielsweise durch einen mit der Drehknopfachse betätigbaren Exzenter und eine Koppel zwischen dem Exzenter und einem radial verschiebbaren Hebel gebildet werden.

Der Drehknopf ist vorzugsweise so ausgebildet, daß mit ihm einerseits die Fokussierung und andererseits der Dioptrieausgleich durchgeführt werden kann. Dazu ist er zwischen einer Fokussierstellung und einer Dioptrieausgleichsstellung axial verschiebbar. Eine Kupplung gestattet es, daß sich in der Fokussierstellung beide Hebel bewegen und in der Dioptrieausgleichsstellung nur ein Hebel bewegt.

Die Kupplung weist vorzugsweise eine mit der Drehknopfachse drehfest verbundene Kupplungsscheibe auf, die mit ihrer einen Stirnseite in Fokussierstellung der Drehknopfachse mit dem Getriebe zur Axialverschiebung des Anschlags und mit ihrer anderen Stirnseite in der Dioptrieausgleichsstellung der Drehknopfachse mit der Exzenterdrehachse drehfest verbunden ist.

Dabei stellt die Fokussierstellung vorzugsweise die in das Drehknopfgehäuse geschobene und die Dioptrieausgleichsstellung die aus dem Drehknopfgehäuse gezogene Stellung der Drehknopfachse dar. Die Kupplungsscheibe ist vorzugsweise mit der Drehknopfachse durch eine Schnappverbindung verbunden, die die Kupplungsscheibe bei eingeschobener Drehknopfachse mit dem Getriebe zur Axialverschiebung des Anschlags und bei herausgezogener Drehknopfachse mit der Exzenterdrehachse verbindet.

Durch die zweiarmigen Hebel zur Betätigung der Fokussiermittel ist ein langer Schiebeweg der Fokussiermittel in den Tuben realisierbar. Dadurch können mit dem erfindungsgemäßen Femrohr auch Beobachtungen auf nahe Distanzen von wenigen Metem durchgeführt werden.

Das vorstehend beschriebene Getriebe zur Betätigung der Fokussiermittel ist zwar bevorzugt, jedoch sind auch andere Getriebe möglich, um einerseits eine Fokussierung mit einem gemeinsamen Drehknopf für beide Fokussiermittel unabhängig von der Änderung des Augenabstandes durchzuführen, andererseits jedoch einen Durchgriff zwischen zwei Gelenkbrücken zu realisieren, z.B. ein Kardangetriebe.

Nach der Erfindung läßt sich generell die Gelenkbrücke mit dem Getriebe schmal und leicht ausbilden.

Das erfindungsgemäße binokulare Fernrohr kann sowohl als Dachkantprismenglas, also mit im wesentlichen fluchtenden Objektiv- und Okularachsen, wie als Porroprismenglas, also mit gegenüber den beiden Okularachsen deutlich versetzten Objektivachsen ausgebildet sein.

Nachstehend ist eine Ausführungsform des erfindungsgemäßen Fernrohres anhand der Zeichnungen beispielhaft näher erläutert. Darin zeigen:
- Fig. 1: eine Draufsicht auf das Femrohr mit weggebrochenen Teilen;
- Fig. 2 und 3: jeweils einen Schnitt durch die Gelenkbrücke des Femrohres nach Fig. 1 mit dem Getriebe in vergrößerter Wiedergabe, und zwar in der eingeschobenen Fokussierstellung bzw. der herausgezogenen Dioptrieausgleichsstellung des Drehknopfes; und
- Fig. 4: einen Schnitt durch die Koppel zum Dioptrieausgleich entlang der Linie IV-IV in Fig.2.

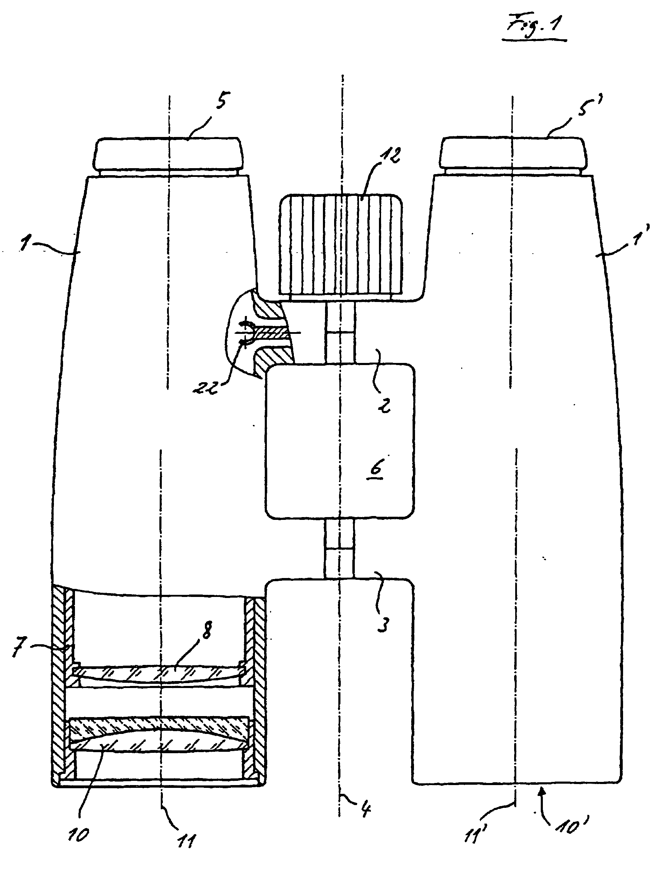

Gemäß Fig. 1 weist das Femrohr zwei Tuben 1,1' auf, die durch zwei Gelenkbrücken 2,3 um die Längsmittelachse 4 des Femrohrs zur Einstellung des Augenabstandes, also der Okulare 5,5' verschwenkbar sind.

Die beiden Gelenkbrücken 2,3 sind in einem solchen Abstand angeordnet, daß dazwischen ein Durchgriff 6 gebildet wird, also ein Freiraum, um die beiden Tuben 1,1'jeweils mit einer Hand umschließen zu können.

Das Fernrohr ist als Dachkantprismenglas ausgebildet, d.h. die Okulare 5,5' und Objektive 10,10' liegen in der Tubusachse 11,11'. Gegebenenfalls könnten in dem Dachkantprismenglas die Achsen der Okulare 5,5' und die Achsen der Objektive 10,10' in jedem Tubus 1,1' auch versetzt sein.

Das Fernrohr weist eine Innenfokussierung auf. Das heißt, wie anhand des linken Tubus 1 in Fig. 1 gezeigt, ist innerhalb jedes Tubus 1,1' und zwischen dem Okular 5,5' und dem Objektiv 10,10' eine Hülse 7 entlang der Tubusachse 11 verschiebbar gelagert, die ein Fokussiermittel 8, z.B. eine Fokussierlinse trägt.

Zur Fokussierung, d.h. der axialen Verschiebung des Fokussiermittels 8 in den beiden Tuben 1,1' ist an der den Okularen 5,5' zugewandten Seite der den Okularen 5,5' zugewandten Gelenkbrücke 2 ein Drehknopf 12 vorgesehen, und in der hohl ausgebildeten Gelenkbrücke 2 ein Getriebe, das die Drehbewegung des Drehknopfes 12 in die Axialverschiebung des Fokussiermittels 8 umwandelt.

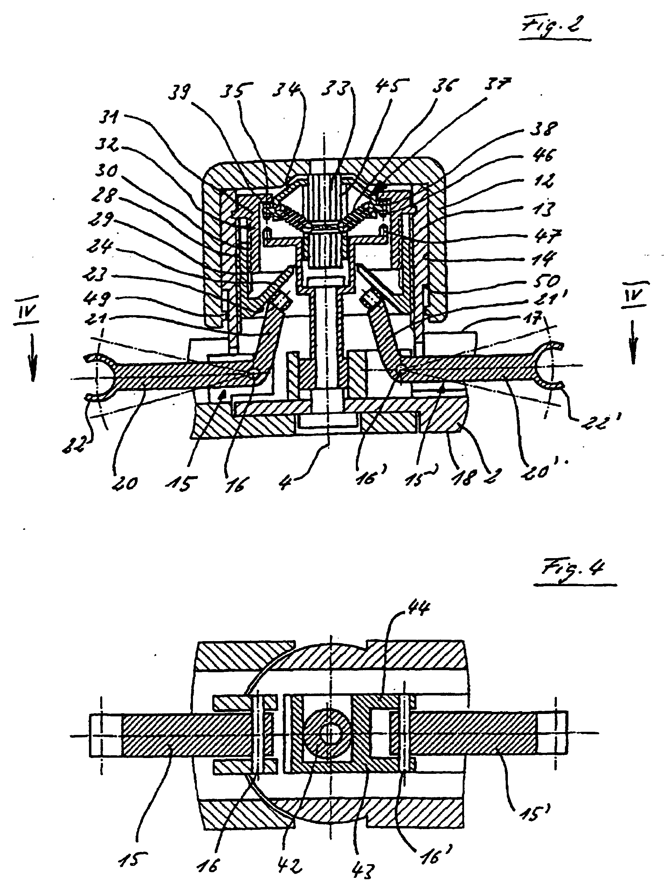

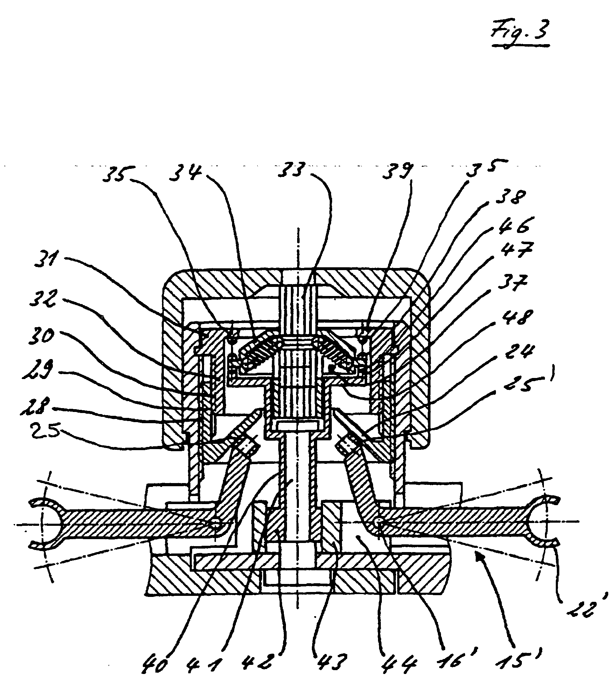

Gemäß Fig. 2 und 3 ist dazu an der Brücke 2 konzentrisch zur Längsachse oder Gelenkbrückendrehachse 4 ein hülsenförmiges Gehäuse 13 vorgesehen, an dem der Drehknopf 12 mit seiner Innenwand 14 drehbar gelagert ist.

Das Getriebe zur Umwandlung der Drehbewegung des Drehknopfes 12 in die Axialverschiebung des Fokussiermittels 8 in beiden Tuben 1,1' weist je einen an den Hülsen 7 angreifenden zweiarmigen Hebel 15,15' auf, der jeweils um eine senkrecht zur Gelenkachse 4 verlaufende Achse 16,16' verschwenkbar ist.

Die Gelenkbrücke 2 weist zwei Stirnwände 17,18 auf. Die Hebel 15,15' sind als Winkelhebel ausgebildet, wobei der eine Hebelarm 20,20', der mit seinem Ende an der Hülse 7 angelenkt ist, sich im wesentlichen quer zu den Tuben 1,1' erstreckt, während der andere Hebelarm 21,21' nach oben, also zum Drehknopf 12 hin abgewinkeft ist. Das Gelenk, mit dem der Hebelarm 20,20' mit der Hülse 7 verbunden ist, kann als Gabel 22,22' ausgebildet sein, die einen nicht näher dargestellten Zapfen oder dergleichen an der Hülse 7 umgreift.

Das von dem Fokussiermittel 8 abgewandte Ende des Hebelarms 21,21' greift an der Konusfläche 23 eines ringförmigen Anschlags 24 oder Widerlagers an, und zwar durch nicht dargestellte Federn, die das Ende 25,25' der beiden Hebelarme 21,21' gegen die Konusfläche 23 drücken. Die Konusfläche 23 erstreckt sich von der Gelenkbrücke 2 weg von außen nach innen zur Drehknopfachse 33.

Der ringförmige Anschlag 24 ist axial verschiebbar. Dazu ist der Anschlag 24 an einer Hülse 29 befestigt, die mit einem Gewinde 28 an der Gehäuseinnenwand 13 zusammenwirkt. Die Verschiebung erfolgt durch ein Getriebe, das aus einer Keilverzahnung 30 an der Hülse 29 und einer Innenhülse 31 mit einer Keilverzahnung 32 besteht.

Zur drehfesten Verbindung des Schraubengetriebes 28 bis 32 mit der sich vom Drehknopf 12 in das Gehäuse 13 erstreckenden koaxial zur Gelenkachse 4 angeordneten Drehknopfachse 33 ist gemäß Fig. 2 eine glockenförmige Kupplungsscheibe 34 vorgesehen, die mit ihrer von der Gelenkbrücke 2 abgewandten Stirnseite durch Formschluß mit der Innenhülse 31 des Schraubengetriebes 28 bis 32 verbindbar ist. Der Formschluß kann z. B. aus einer Stirnverzahnung 38 an der Stirnseite der Kupplungsscheibe 34 bestehen, in die Zapfen oder dergleichen Vorsprünge 35 eingreifen, die an einem Flansch 39 an der Innenhülse 31 des Schraubengewindes 28 bis 32 vorgesehen sind.

Die drehfeste Verbindung der Kupplungsscheibe 34 mit der Drehknopfachse 33 erfolgt durch eine Keilverzahnung 45 an der Drehknopfachse 33. Die axiale Abstützung der Kupplungsscheibe 34 gegen die Drehknopfachse 33 erfolgt durch eine z.B. aus mehreren Federn 36 bestehende Schnappverbindung 37. Die Federelemente 36 bzw. die Schnappverbindung 37 sind dazu mit ihrem äußeren Ende bzw. Rand an der Kupplungsscheibe 34 und mit ihrem inneren Ende bzw. Rand an der Drehknopfachse 33 gelenkig befestigt.

Um das Femrohr zu fokussieren, wird der Drehknopf 12 in der eingeschobenen Stellung gemäß Fig. 2 gedreht, wobei die Drehbewegung des Drehknopfes 12 von der Drehknopfachse 33 direkt auf die Kupplungsscheibe 34 und die in die Kupplungsscheibe 34 eingreifenden Vorsprünge 35 auf das Schraubengetriebe 28 bis 32 übertragen und durch letzteres in eine Axialverschiebung des Anschlages 24 umgewandelt wird, wodurch die Winkelhebel 15,15' mit ihren mit den Gabeln 22,22' versehenen Enden die Fokussiermittel 8 axial verschieben.

Da die Winkelhebel 15,15' mit den Enden 25,25' an dem konusförmigen Anschlag 23 gleiten, wenn die Tuben 1,1'um die Achse 4 zur Einstellung des Augenabstandes verschwenkt werden, ohne daß das Getriebe betätigt wird, das die Drehknopfdrehung in die Axialverschiebung der Fokussiermittel 8 umwandelt, erfolgt bei dem erfindungsgemäßen Fernrohr die Fokussierung unabhängig von der Einstellung des Augenabstandes.

Zum Dioptrieausgleich ist der eine, in Fig. 2 und 3 rechte Winkelhebel 15' in Bezug auf die Drehknopfachse 33 oder Gelenkachse 4 z.B. radial verschiebbar ausgebildet.

Dazu ist eine Welle 40 auf einem Zapfen 41 koaxial zur Drehknopfachse 33 drehbar gelagert. Die Welle 40 ist in Höhe der Gelenkachsen 16,16' der Winkelhebel 15,15' mit einem Exzenter 42 versehen (Fig. 4), an dem eine Koppel 43 angreift, an deren anderen Ende, das beispielsweise als Gabel 44 ausgebildet ist, die Schwenkachse 16' des Winkelhebels 15' drehbar gelagert ist.

Wenn der Exzenter 42 gedreht wird, wird damit der Winkelhebel 15' um den Punkt verschwenkt, an dem das Ende 25' an dem Anschlag oder Widerlager 24 anliegt, wodurch die Gabel 22' und damit das an ihr befestigte Fokussiermittel in dem Tubus 1' axial verschoben wird.

Die Welle 40 mit dem Exzenter 42 ist in der herausgezogenen Stellung des Drehknopfes 12 drehfest mit der Drehknopfachse 33 verbunden (Fig. 3). Dazu wird die Kupplungsscheibe 34 durch die Schnappverbindung 37, die beim Herausziehen des Drehknopfes 12 sich gegen die Drehknopfachse 33 abstützt, so verschoben, daß die Kupplungsscheibe 34 mit ihrer einen Stirnverzahnung 38 außer Eingriff mit den Vorsprüngen 35 an dem Flansch 39 am Schraubengewinde 28 bis 32 gerückt und unter Formschluß mit der Welle 40 verbunden wird.

Dieser Formschluß kann durch eine Stirnverzahnung 46 an der anderen, also der Brücke 2 zugewandten Stirnseite der Kupplungsscheibe 34 gebildet sein, in die Zapfen oder dergleichen Vorsprünge 47 eingreifen, die an einem Flansch 48 an der Welle 40 befestigt sind.

Die Fixierung des Drehknopfes 12 in der herausgezogenen Dioptrieausgleichsstellung erfolgt durch das Schnappelement 37. Zur Begrenzung des Weges ist an der Drehknopfinnenseite ein Vorsprung 49 vorgesehen, der mit einem Anschlag 50 am Gehäuse 13 zusammenwirkt.

## Patentansprüche

1. Binokulares Fernrohr mit Innenfokussierung mit zwei Tuben (1, 1'), die zur Einstellung des Augenabstandes durch zwei im Abstand voneinander angeordnete, um eine Gelenkachse (4) verschwenkbare Gelenkbrücken (2,3) verbunden sind, wobei beide Tuben (1,1') zur Fokussierung axial verschiebbare Fokussiermittel (8) aufweisen, die mit einem gemeinsamen Drehknopf (12) und einem Getriebe betätigbar sind, das zwei zweiarmige Hebel (15, 15') in einer der beiden Gelenkbrücken (2,3) aufweist, deren eines Ende an dem einen bzw. anderen der beiden Fokussiermittel (8) angreift, wobei jeder Hebel (15, 15') um eine senkrecht zur Fernrohr-Längsrichtung laufende Achse (16, 16') verschwenkbar ist, und das andere Ende jedes Hebels (15,15') an einem durch Drehung des Drehknopfes (12) axial verschiebbaren ringförmigen Anschlag (24) angreift, und das Getriebe vom Drehknopf (12) zu den Fokussiermitteln (8) durch die eine Gelenkbrücke (2, 3) geführt ist **dadurch gekennzeichnet, dass** die Gelenkbrücken (2,3) zur Bildung eines Durchgriffs (6) ohne Verbindung durch eine Mittelachse im Abstand voneinander angeordnet sind, wobei die zweiarmigen Hebel (15,15') als Winkelhebel, und der Anschlag (24) als Konusfläche (23) ausgebildet sind.

2. Femrohr nach Anspruch 1, **dadurch gekennzeichnet, daß** der zweiarmige Hebel (15, 15') in der Gelenkbrücke (2) verschwenkbar gelagert ist.

3. Fernrohr nach Anspruch 1, **dadurch gekennzeichnet, daß** zur Axialverschiebung des Anschlags (24) ein Schraubengetriebe (28 bis 32) vorgesehen ist.

4. Femrohr nach Anspruch 3, **dadurch gekennzeichnet, daß** das Schraubengetriebe (28 bis 32) durch Drehen des Drehknopfes (12) betätigbar ist.

5. Fernrohr nach einem der vorstehenden Ansprüche, **dadurch gekennzeichnet, daß** mit dem Drehknopf (12) und einem Getriebe die Achse (16, 16') eines der beiden Hebel (15, 15') zum Dioptrieausgleich verschiebbar ist.

6. Fernrohr nach dem Anspruch 5, **dadurch gekennzeichnet, daß** das Getriebe zur Hebelverschiebung durch einen Exzenter (42) und eine Koppel (43) zwischen dem Exzenter (42) und dem Hebel (15') gebildet wird.

7. Fernrohr nach Anspruch 6, **dadurch gekennzeichnet, daß** der Exzenter (42) an einer Welle (40) angeordnet ist, die durch eine drehfeste Verbindung mit der Drehknopfachse (33) betätigbar ist.

8. Fernrohr nach einem der vorstehenden Ansprüche, **dadurch gekennzeichnet, daß** der Drehknopf (12) zwischen einer Fokussierstellung und einer Dioptrieausgleichsstellung verschiebbar ist.

9. Fernrohr nach einem der vorstehenden Ansprüche, **dadurch gekennzeichnet, daß** eine Kupplung zur Verbindung des Drehknopfes (12) entweder mit dem Getriebe zur Axialverschiebung des Anschlags (24) in der Fokussierstellung oder mit der Exzenterdrehachse (40) in der Dioptrieausgleichsstellung vorgesehen ist.

10. Fernrohr nach Anspruch 9, **dadurch gekennzeichnet, daß** die Kupplung eine mit der Drehknopfachse (33) drehfest verbundene Kupplungsscheibe (34) aufweist, die mit ihrer einen Stirnseite (38) in Fokussierstellung des Drehknopfes (12) mit dem Getriebe zur Axialverschiebung des Anschlags (24) und mit ihrer anderen Stirnseite (46) in der Dioptrieausgleichsstellung mit der Exzenterdrehachse (40) drehfest verbunden ist.

11. Femrohr nach Anspruch 10, **dadurch gekennzeichnet, daß** die Drehknopfachse (33) zur drehfesten Verbindung mit der Kupplungsscheibe (34) eine Keilverzahnung (45) aufweist und sich die Kupplungsscheibe (34) an der Drehknopfachse (33) über eine Schnappverbindung (37) axial abstützt.

## Claims

1. A binocular telescope with internal focus having two tubes (1, 1') connected, for adjusting the distance between the eyes, by two spaced-apart jointed bridges (2, 3) swiveling about a joint axis (4), the two tubes (1, 1') having axially displaceable focusing means (8) for focusing which are operated with a common turning knob (12) and a gear, the gear having two two-armed levers (15, 15') in one of the jointed bridges (2, 3), one end thereof acting upon one or the other of the two focusing means (8), each lever (15, 15') swiveling about an axis (16, 16') extending perpendicular to the longitudinal direction of the telescope, and the other end of each lever (15, 15') acting upon an annular stop (24) axially displaceable by rotation of the turning knob (12), and the gear passing from the turning knob (12) to the focusing means (8) through one jointed bridge (2, 3), **characterized in that** the jointed bridges (2, 3) are disposed a distance apart without connection by a center axle so as to form a reach-through (6), the two-arm levers (15, 15') being formed as angle levers, and the stop (24) as a conical surface (23).

2. The telescope according to claim 1, **characterized in that** the two-arm lever (15, 15') is pivoted in the jointed bridge (2)

3. The telescope according to claim 1, **characterized in that** a helical gear (28 to 32) is provided for axial displacement of the stop (24).

4. The telescope according to claim 3, **characterized in that** the helical gear (28 to 32) is operated by rotation of the turning knob (12).

5. The telescope according to any of the above claims, **characterized in that** the axis (16, 16') of one of the two levers (15, 15') is displaceable for diopter adjustment with the turning knob (12) and a gear.

6. The telescope according to claim 5, **characterized in that** the gear for lever displacement is formed by an eccentric (42) and a coupler (43) between the eccentric (42) and the lever (15').

7. The telescope according to claim 6, **characterized in that** the eccentric (42) is disposed on a shaft (40) which is operated by a connection ensuring rotation in unison with the turning knob axle (33).

8. The telescope according to any of the above claims, **characterized in that** the turning knob (12) is displaceable between a focusing position and a diopter adjustment position.

9. The telescope according to any of the above claims, **characterized in that** a coupling is provided for connecting the turning knob (12) either with the gear for axial displacement of the stop (24) in the focusing position or with the eccentric shaft (40) in the diopter adjustment position.

10. The telescope according to claim 9, **characterized in that** the coupling has a friction disk (34) connected so as to rotate in unison with the turning knob axle (33) and connected so as to rotate in unison at one face (38) with the gear for axial displacement of the stop (24) in the focusing position of the turning knob (12), and at its other face (46) with the eccentric shaft (40) in the diopter adjustment position.

11. The telescope according to claim 10, **characterized in that** the turning knob axle (33) has a splining (45) for connection ensuring rotation in unison with the friction disk (34), and the friction disk (34) is axially supported on the turning knob axle (33) via a snap connection (37).

## Revendications

1. Lunette binoculaire à mise au point interne comportant deux tubes (1, 1') qui sont, en vue du réglage de l'écart des yeux, raccordés par deux ponts articulés (2, 3) espacés l'un de l'autre, pivotant autour d'un axe d'articulation (4), les deux tubes (1, 1') présentant, pour la mise au point, des moyens de mise au point (8) déplaçables axialement, qui peuvent être manoeuvrés au moyen d'un bouton rotatif commun (12) et d'une transmission, qui présente deux leviers à deux bras (15, 15') dans l'un des deux ponts articulés (2, 3), dont une extrémité est appliquée sur l'un ou l'autre des deux moyens de mise au point (8), chaque levier (15, 15') pouvant pivoter autour d'un axe (16, 16') s'étendant perpendiculairement à la direction longitudinale de la lunette, l'autre extrémité de chaque levier (15, 15') étant appliquée sur une butée annulaire (24) déplaçable axialement par rotation du bouton rotatif (12) et la transmission traversant le premier pont articulé (2, 3) du bouton rotatif (12) jusqu'aux moyens de mise au point (8), **caractérisée en ce que** les ponts articulés (2, 3) sont aménagés à distance l'un de l'autre, sans raccordement par un axe médian, pour former une ouverture de passage (6), les leviers à deux bras (15, 15') se présentant sous la forme d'un levier coudé et la butée (24) sous la forme d'une surface conique (23) .

2. Lunette suivant la revendication 1 **caractérisée en ce que** le levier (15, 15') à deux bras est monté de façon à pouvoir basculer dans le pont articulé (2).

3. Lunette suivant la revendication 1, **caractérisée en ce que** des moyens de transmission de mouvement à filetage (28 à 32) sont prévus pour le déplacement axial de la butée (24) .

4. Lunette suivant la revendication 3, **caractérisée en ce que** les moyens de transmission de mouvement à filetage (28 à 32) peuvent être manoeuvrés au moyen d'une rotation du bouton rotatif (12).

5. Lunette suivant l'une des revendications précédentes, **caractérisée en ce qu'**à l'aide du bouton rotatif (12) et de moyens de transmission de mouvement, l'axe (16, 16') de l'un des deux leviers (15, 15') est déplaçable en vue de l'égalisation dioptrique.

6. Lunette suivant la revendication 5, **caractérisée en ce que** les moyens de transmission de mouvement servant au déplacement de levier sont formés d'un excentrique(42) et d'un organe d'accouplement (43) disposé entre l'excentrique (42) et le levier (15').

7. Lunette suivant la revendication 6, **caractérisée en ce que** l'excentrique (42) est disposé sur un arbre (40) qui peut manoeuvré au moyen d'un calage en rotation sur l'axe de bouton rotatif (33).

8. Lunette suivant l'une des revendications précédentes, **caractérisée en ce que** le bouton rotatif (12) est déplaçable entre une position de mise au point et une position d'égalisation dioptrique.

9. Lunette suivant l'une des revendications précédentes, **caractérisée en ce qu'**il est prévu un accouplement servant à relier le bouton rotatif (12) soit aux moyens de transmission de mouvement servant au déplacement axial de la butée (24), dans la position de mise au point, soit à l'arbre de rotation d'excentrique (40), dans la position d'égalisation dioptrique.

10. Lunette suivant la revendication 9 **caractérisée en ce que** l'accouplement comprend un disque d'accouplement (34) qui est calé en rotation sur l'axe de bouton rotatif (33) et qui, par une première face frontale (38), est calé en rotation sur les moyens de transmission de mouvement servant au déplacement axial de la butée (24), dans la position de mise au point du bouton rotatif (12), et qui, par son autre face frontale (46), est calée en rotation sur l'arbre de rotation d'excentrique (40), dans la position d'égalisation dioptrique.

11. Lunette suivant la revendication 10 **caractérisée en ce que** l'axe de bouton rotatif (33) comporte un engrenage à cannelures (45) pour le calage en rotation sur le disque d'accouplement (34) et le disque d'accouplement (34) prend appui axialement sur l'axe de bouton rotatif (33) au moyen d'une liaison par enclenchement (37).
